# EUROPEAN PATENT SPECIFICATION

(11) **EP 3 772 120 B1**
(45) Date of publication and mention of the grant of the patent: **28.07.2021**
(21) Application number: 19217502.4
(22) Date of filing: 18.12.2019
(51) Int. Cl.: H01M 50/147

(54) **BATTERY MODULE, SECONDARY BATTERY AND CAP PLATE ASSEMBLY THEREOF**
BATTERIEMODUL, SEKUNDÄRBATTERIE UND KAPPENPLATTENANORDNUNG DAFÜR
MODULE DE BATTERIE, BATTERIE SECONDAIRE ET SON ENSEMBLE DE PLAQUE DE COUVERCLE

(30) Priority: 30.07.2019 CN 201910696198
(43) Date of publication of application: 03.02.2021
(73) Proprietor: Contemporary Amperex Technology Co., Limited, Jiaocheng District Ningde City Fujian 352100 (CN)
(72) Inventor: HUANG, Siying, Fujian, 352100 (CN); ZHANG, Shiyao, Fujian, 352100 (CN); LI, Quankun, Fujian, 352100 (CN); XU, Jinmei, Fujian, 352100 (CN); ZHAO, Fenggang, Fujian, 352100 (CN); WANG, Xuehui, Fujian, 352100 (CN)
(74) Representative: Würmser, Julian

(56) References cited:
- EP-A1- 0 948 065
- EP-A2- 1 821 355
- CN-U- 204 632 837
- DE-A1-102013 210 292

## Description

### TECHNICAL FIELD

The present disclosure relates to the field of battery, and in particular to a battery module, a secondary battery and a cap plate assembly thereof.

### BACKGROUND

At present, an ordinary second battery usually includes a case, an electrode assembly received in the case and a cap plate fixed on the case. To ensure safety of the secondary battery, an explosion-proof sheet is usually disposed at the cap plate. When an internal pressure in the secondary battery reaches an opening pressure of the explosion-proof sheet, the explosion-proof sheet will open to release pressure.

### SUMMARY

The inventors find during the invention process that: a plurality of secondary batteries may be assembled into a module through series or parallel connection. When one of the secondary batteries is in a case of abuse such as nail penetration, the explosion-proof sheet of the secondary battery can open in time to release pressure and cool down. However, another secondary battery adjacent to the secondary battery causes its temperature to increase quickly due to heat diffusion and internal short circuit. At this time, the internal gas pressure does not reach the opening pressure of the explosion-proof sheet, thereby resulting in an explosion.

In view of the foregoing problems in the related art, an object of some embodiments of the present disclosure is to provide a battery module, a secondary battery and a cap plate assembly thereof, the explosion-proof sheet of which may be open in time to achieve pressure release and temperature decrease, thereby increasing safety performance. DE102013210292, EP1821355 and CN204632837 describe batteries having vent elements fixed on cap plate by low melting materials.

To achieve the above object, the present disclosure provides a battery module, a secondary battery and a cap plate assembly thereof according to claim 1.

The cap plate assembly includes a cap plate, an explosion-proof sheet and a fixing piece. The cap plate is provided with a through hole, the explosion-proof sheet is disposed at the cap plate and seals the through hole. Further, the explosion-proof has a weak region. The fixing piece connects the cap plate and the explosion-proof sheet. The fixing piece has a melting point lower than the cap plate and the explosion-proof sheet. The explosion-proof sheet is configured as follows: when the fixing piece does not melt, the weak region may break in a case that the internal gas pressure of the secondary battery exceeds an gas pressure required for breakage of the weak region; when the fixing piece melts, the explosion-proof sheet can separate at least partially from the cap plate in a case that the internal gas pressure of the secondary battery is lower than the pressure required for breakage of the weak region.

The fixing piece is an alloy and the alloy has a melting point of 50°C-300°C.

The alloy is a tin-Bismuth alloy or a tin-copper-silver alloy.

The explosion-proof sheet includes a main body and a connecting part. The main body covers the through hole. The weak region is formed at the main body, and a thickness of the weak region is smaller than a thickness of other region of the main body. The connecting part surrounds an outer side of the main body and is fixed to the cap plate through the fixing piece. When the fixing piece does not melt, a connecting strength between the fixing piece and the connecting part is larger than a breaking strength of the weak region.

The cap plate has a first surface and a second surface both disposed oppositely in a thickness direction, and the through hole penetrates through the first surface and the second surface. Further, the cap plate has a first groove which concaves toward the second surface from the first surface, and the first groove surrounds the periphery of the through hole. The fixing piece is at least partially received in the first groove and located between the explosion-proof sheet and a bottom wall of the first groove.

The cap plate further includes a stopping part extending toward the explosion-proof sheet from the bottom wall of the first groove. The stopping part surrounds the periphery of the through hole and the fixing piece is at least partially located at a side that is on the stopping part and away from the through hole.

A top surface of the stopping part does not go beyond the first surface along the extending direction of the stopping part; the explosion-proof sheet is at least partially located in the first groove in the thickness direction.

The fixing piece includes a first part and a second part. The first part is located at a side that is on the stopping part and away from the through hole and the second part extends from an edge that is on the first part and close to the through hole and is located between the stopping part and the explosion-proof sheet.

The secondary battery according to claim 11 includes an electrode assembly, a case and the cap plate assembly according to claim 1. The electrode assembly is received in the case and the cap plate of the cap plate assembly is connected with the case.

The battery module according to claim 12 includes the secondary battery according to claim 11. There are a plurality of secondary batteries arranged in sequence.

In the present disclosure, the fixing piece with a low melting point connects the cap plate and the explosion-proof sheet, and moreover the weak region is disposed on the explosion-proof sheet, thus the gas pressure and temperature inside the secondary battery are both taken into consideration, the explosion-proof sheet may be open in time to achieve pressure release and temperature decrease, thereby increasing safety performance.

### BRIEF DESCRIPTION OF THE DRAWINGS

FIG. 1 is a schematic diagram illustrating a secondary battery according to the present disclosure.
FIG. 2 is an enlarged view of a box position of the secondary battery of FIG. 1.
FIG. 3 is an enlarged view of a circled position of FIG. 2.
FIG. 4 is an exploded diagram of a cap plate assembly of FIG. 1.
FIG. 5 is a schematic diagram illustrating a cap plate of a secondary battery according to the present disclosure.
FIGS. 6-10 are schematic diagrams of different examples of a cap plate assembly.
FIG. 11 is an enlarged view of a circled position of FIG. 9.
FIG. 12 is an enlarged view of a circled position of FIG. 10.
FIG. 13 is a schematic diagram illustrating a battery module according to the present disclosure.

Reference numerals are described as follows:
1 cap plate assembly
   11 cap plate
      111 through hole
      112 first surface
      113 second surface
      114 first groove
         114a bottom wall
         114b side wall
      115 stopping part
      116 second groove
   12 explosion-proof sheet
      121 main body
         121a weak region
         121b notch
      122 connecting part
   13 fixing piece
      131 first part
      132 second part
      133 receiving groove
      134 inner wall
   14 protection sheet
   15 electrode terminal
   16 insulator
2 electrode assembly
3 case
4 current collecting assembly
X length direction
Y width direction
Z thickness direction
10 battery module
100 secondary battery

### DETAILED DESCRIPTION OF THE EMBODIMENTS

To make the object, technical solutions and advantages of the present disclosure more clear, the present disclosure will be further detailed below in combination with accompanying drawings and examples. It is understood that the specific examples described herein are used only for explaining the present disclosure and not intended to limit the present disclosure.

In the descriptions of the present disclosure, the terms "first" and "second" are used only for the purpose of description rather than understood as indicating or implying relative importance, unless otherwise stated herein. The term "a plurality" refers to two or more. Unless otherwise stated, the term "connection" should be understood in a broad sense. For example, the "connection" may be a fixed connection, a removable connection, an integrated connection, an electric connection or a signal connection. The "connection" may be a direct connection or may be an indirect connection through an intermediate medium. Those skilled in the art may understand the specific meanings of the above terms in the present disclosure based on actual situations.

In the descriptions of the present disclosure, it is understood that the location words such as "upper" and "lower" described in the present disclosure are described from the angle shown in figures and shall not be understood as limiting of the examples of the present disclosure. The present disclosure will be further detailed below in combination with specific examples and accompanying drawings.

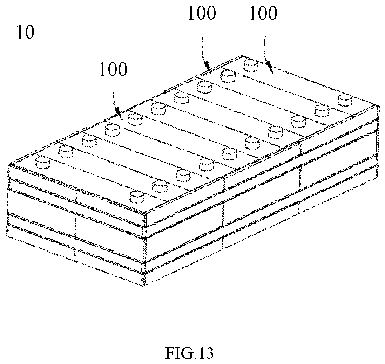

A battery module according to the present disclosure may include a secondary battery, an end plate, a side plate and a bus bar. The secondary battery may be a cylindrical lithium ion battery. As shown in FIG. 13, the battery module 10 may comprise a plurality of secondary batteries 100 arranged in sequence. There are two end plates which are respectively disposed at both ends of the plurality of secondary batteries along an arrangement direction. There are also two side plates which are respectively disposed at both sides of the plurality of secondary batteries. The end plates and the side plates are connected into one piece and form a rectangular frame. The frame fixes the plurality of secondary batteries. The bus bar electrically connects the plurality of secondary batteries in series connection, parallel connection or a combination of series connection and parallel connection.

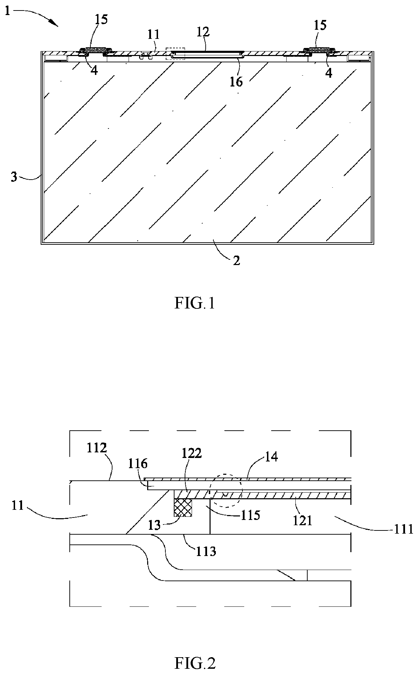

As shown in FIG. 1, the secondary battery includes a cap plate assembly 1, an electrode assembly 2, a case 3 and a current collecting assembly 4.

The electrode assembly 2 is a core member used for the secondary battery to realize charge and discharge functions. The electrode assembly 2 includes a positive electrode plate, a negative electrode plate and a separator. The separator separates the positive electrode plate from the negative electrode plate. The positive electrode plate includes a positive electrode current collector and a positive electrode active material layer coated on a surface of the positive electrode current collector. The positive electrode current collector may be an aluminum foil, and the positive electrode active material layer includes a ternary material, lithium manganate or lithium iron phosphate. The negative electrode plate includes a negative electrode current collector and a negative electrode active material layer coated on a surface of the negative electrode current collector. The negative electrode current collector may be a copper foil and the negative electrode active material layer includes graphite or silicon.

The electrode assembly 2 may be of a winding structure. Specifically, there is one positive electrode plate and one negative electrode plate respectively, and the positive electrode plate and the negative electrode plate are of a strip structure. The positive electrode plate, the separator and the negative electrode plate are stacked in sequence and wound two or more circles to form the electrode assembly 2. During preparation of the electrode assembly 2, the electrode assembly 2 may be firstly wound into a hollow cylindrical structure and then flattened to a flat shape.

Alternatively, the electrode assembly 2 may also be of a stacked structure. Specifically, there are a plurality of positive electrode plates and a plurality of negative electrode plates. The plurality of positive electrode plates and the plurality of negative electrode plates are stacked alternately and the separator separates the positive electrode plate from the negative electrode plate.

The case 3 may be of hexahedral shape or another shape. The interior of the case 3 is formed into a receiving chamber to receive the electrode assembly 2 and electrolyte. An opening is formed at an end of the case 3 and the electrode assembly 2 may be placed into the receiving chamber through the opening. The case 3 may be made of a conductive metal material. In an example, the case 3 is made of aluminum or an aluminum alloy.

The cap plate assembly 1 includes a cap plate 11, an electrode terminal 15 and an insulator 16. The cap plate is disposed at the case 3 and covers the opening of the case 3. Therefore, the electrode assembly 2 is sealed in the case 3. The cap plate 11 may be a metal plate and may be connected to the case 3 by welding.

The cap plate 11 is provided with two penetrating terminal holes. Two electrode terminals 15 are disposed at an upper side of the cap plate 11, that is, at a side of the cap plate 11 away from the electrode assembly 2. Each electrode terminal 15 covers a corresponding terminal hole. A sealing ring is disposed between the cap plate 11 and the electrode terminal 15. The terminal holes may be sealed up by compressing the sealing ring.

The insulator 16 is disposed at an inner side of the cap plate 11 so that the electrode assembly 2 and the cap plate 11 are separated, thereby reducing the risk of short circuit.

There are two current collecting assemblies 4. One current collecting assembly 4 is connected to one electrode terminal 15 and the positive electrode plate of the electrode assembly 2; the other current collecting assembly 4 is connected to another electrode terminal 15 and the negative electrode plate of the electrode assembly 2.

During use of the secondary batteries, if the secondary battery is in a case of abuse such as nail penetration, the electrode assembly 2 may be short circuited and generate a large amount of gas. The gas accumulates in the case 3, which easily cause explosion. Therefore, to increase the safety performance of the secondary battery, the cap plate assembly 1 of the present disclosure may further include an explosion-proof sheet 12.

Specifically, the cap plate 11 is disposed with a through hole 111, and the explosion-proof sheet 12 is disposed at the cap plate 11 and seals the through hole 111. The explosion-proof sheet 12 can cover the through hole 111 and separate an internal space of the secondary battery from an outside space, thereby preventing the electrolyte in the case 3 from leaking through the through hole 111.

The explosion-proof sheet has a weak region 121a. Compared with other region of the explosion-proof sheet, the weak region 121a has a low strength and thus easy to break. In the present disclosure, the weak region 121a may be of ring shape.

According to the present disclosure, the strength of the weak region 121a may be reduced by decreasing the thickness of the weak region 121a. That is, a thickness of the weak region 121a is smaller than a thickness of other region of the explosion-proof sheet 12.

In a case of short circuit, the electrode assembly 2 may release gas. With increasing gas, the gas pressure in the secondary battery will gradually increase. The explosion-proof sheet 12 will deform under the action of the gas pressure. When the gas pressure in the secondary battery reaches a given value, the explosion-proof sheet 12 will break at the weak region 121a. The high pressure gas breaks through the explosion-proof sheet 12 and is released to outside of the secondary battery, thereby releasing pressure and reducing explosion risk.

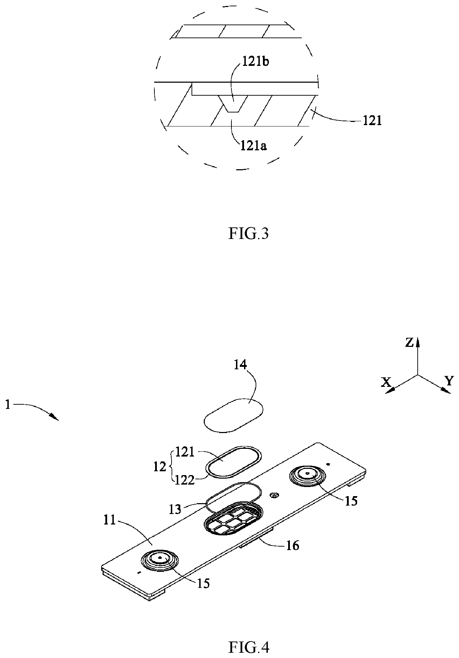

Specifically, the explosion-proof sheet 12 includes a main body 121 and a connecting part 122. The main body 121 covers the through hole 111. The weak region 121a is formed at the main body 121 and the thickness of the weak region 121a is smaller than the thickness of other region of the main body 121. As shown in FIG. 3, the weak region 121a is formed by pressing a notch 121b on the main body 121. The connecting part 122 surrounds the outer side of the main body 121, the connecting part 122 is connected to the cap plate 11 and a connecting region between the connecting part 122 and the cap plate 11 is of ring shape. In this way, sealing is achieved.

In a battery module, when a particular secondary battery is in a case of abuse such as nail penetration, the explosion-proof sheet of the secondary battery can open in time to release pressure and reduce temperature. However, the heat of the nail-penetrated secondary battery may be quickly diffused to an adjacent secondary battery. The internal temperature of the adjacent secondary battery is quickly increased due to heat diffusion of other secondary battery and its internal short circuit. When the secondary battery reaches a temperature of an explosion, but the gas pressure in the secondary battery does not reach a value required for breakage of the weak region 121a, burning and explosion may occur.

To reduce safety risk, in an example, the cap plate assembly 1 of the present disclosure may further include a fixing piece 13. The fixing piece 13 connects the cap plate 11 and the explosion-proof sheet 12. Specifically, the fixing piece 13 is connected to the connecting part 122 of the explosion-proof sheet 12. The melting point of the fixing piece 13 is lower than the melting point of the cap plate 11 and the melting point of the explosion-proof sheet 12. Normally, the fixing piece is in a solid state and connects with the cap plate 11 and the connecting part 122 to ensure connecting strength between the cap plate 11 and the connecting part 122, thereby preventing the connecting part 122 from disconnecting the cap plate 11. When a secondary battery has a quickly increasing temperature due to heat diffusion of another secondary battery and/or its internal short circuit, the fixing piece may be molten at a high temperature. During the melting process, the connecting strength between the cap plate 11 and the connecting part 122 may be reduced.

In the present disclosure, the explosion-proof sheet 12 is configured as follows: when the fixing piece 13 does not melt, the weak region 121a will break in a case that the internal gas pressure in the secondary battery exceeds a value required for breakage of the weak region 121a. The statement that "the fixing piece 13 does not melt" refers to that the fixing piece 13 is entirely in a solid state. In case of no melting, the fixing piece 13 can effectively connect the cap plate 11 and the connecting part 122. Thus, the connecting part 122 will not separate from the cap plate 11. In the present disclosure, the gas pressure required for breakage of the weak region 121a may be set to 0.5MPa - 10MPa. The specific value may be set according to the model of the secondary battery.

The explosion-proof sheet 12 is further configured as follows: when the fixing piece 13 melts, the explosion-proof sheet 12 can at least partially separate from the cap plate 11 in a case that the internal gas pressure in the secondary battery is lower than the value required for breakage of the weak region 121a. The statement "the fixing piece 13 melts" refers to that the fixing piece 13 at least partially melts into liquid. When the fixing piece 13 melts, the connecting strength between the cap plate 11 and the connecting part 122 is reduced. Therefore, the connecting part 122 can at least partially separate from the cap plate 11 in a case that the internal gas pressure of the secondary battery is lower than the gas pressure required for breakage of the weak region 121a. When the connecting part 122 separates from the cap plate 11, a distance between the connecting part 122 and the cap plate 11 is increased so that a gap is formed between the connecting part 122 and the cap plate 11. In this case, the internal gas of the secondary battery will be released from the gap.

In a battery module of the present disclosure, when a particular secondary battery is short circuited, the electrode assembly 2 of the secondary battery will release heat and gas.

If no other secondary battery diffuses a large amount of heat to the secondary battery, before the fixing piece 13 of the secondary battery reaches the melting point, the internal gas pressure of the secondary battery can reach a value required for breakage of the weak region 121a. At this time, the explosion-proof sheet 12 breaks at the weak region 121a. The high pressure gas breaks through the explosion-proof sheet 12 and is released to outside of the secondary battery, thereby releasing pressure and reducing temperature, and further reducing safety risk.

If another secondary battery, for example, a battery in case of abuse such as nail penetration, diffuses a large amount of heat to the short-circuited secondary battery, the secondary battery may have a quickly increasing temperature due to heat diffusion of the another secondary battery and its internal short circuit. When the temperature of the secondary battery reaches a given value, the fixing piece 13 melts. At this time, even though the internal gas pressure of the secondary battery is lower than the gas pressure required for breakage of the weak region 121a, the gas may still separate the connecting part 122 from the cap plate 11. In this way, the gas is discharged to outside of the secondary battery, thereby releasing pressure, reducing temperature and lowering safety risk.

In conclusion, in the present disclosure, the fixing piece 13 with a low melting point is connected with the cap plate and the explosion-proof sheet, and moreover the weak region is disposed at the explosion-proof sheet, thus the gas pressure and temperature inside the secondary battery are both taken into consideration, the explosion-proof sheet may be opened in time to achieve pressure release and temperature decrease, thereby reducing explosion risk and improving safety performance.

During the assembly process of the cap plate assembly 1, the fixing piece 13 may be firstly placed between the cap plate 11 and the explosion-proof sheet 12, and then the fixing piece 13 is heated. After the fixing piece 13 melts, the fixing piece 13 is connected with the cap plate 11 and the explosion-proof sheet 12. After solidification, the fixing piece 13 may connect the cap plate 11 and the explosion-proof sheet 12 to ensure the connecting strength between the cap plate 11 and the explosion-proof sheet 12.

The material of the fixing piece 13 is alloy. During a normal use process of the secondary battery, the electrode assembly 2 may also releases heat, resulting in temperature increase of the secondary battery. If the melting point of the alloy is excessively low, the fixing piece 13 may melt during a normal use of the secondary battery, so that the connecting strength between the cap plate 11 and the explosion-proof sheet 12 is insufficient. Further, when the secondary battery vibrates, the explosion-proof sheet 12 may separate from the cap plate 11, resulting in leakage of electrolyte and safety accident. Thus, in an example, the temperature of the alloy shall not be lower than 50°C.

If the melting point of the alloy is excessively high, when the secondary battery reaches a critical temperature of an explosion, the alloy may not melt and the explosion-proof sheet 12 also may not separate from the cap plate 11, resulting in safety accident. Therefore, in an example, the melting point of the alloy shall not be higher than 300°C.

The alloy is a tin-bismuth alloy or a tin-copper-silver alloy. The tin-bismuth alloy or the tin-copper-silver alloy may be better connected with the cap plate 11 and the explosion-proof sheet 12 both made of aluminum, thereby increasing connecting strength.

When the fixing piece 13 does not melt, the connecting strength between the fixing piece 13 and the connecting part 122 is larger than the breaking strength of the weak region 121a. It is noted that the breaking strength of the weak region 121a refers to a gas pressure critical value enabling the explosion-proof sheet 12 to break at the weak region 121a on a precondition that the fixing piece 13 does not melt. The gas pressure critical value may be 0.5MPa - 10MPa. The connecting strength between the fixing piece 13 and the explosion-proof sheet 12 refers to a gas pressure critical value enabling the explosion-proof sheet 12 to separate from the fixing piece 13 on a precondition that the fixing piece 13 does not melt. When the fixing piece 13 does not melt, if the connecting strength between the fixing piece 13 and the explosion-proof sheet 12 is excessively small, the explosion-proof sheet 12 may separate from the fixing piece 13 and the cap plate 11 before the internal gas pressure of the secondary battery reaches the breaking strength of the weak region 121a, so that the explosion-proof sheet 12 cannot open in a case that the secondary battery reaches a set gas pressure value. Further, compared with control of consistency of thickness of the weak region 121a, it is more difficult to control consistency of connecting strength between the fixing piece 13 and the explosion-proof sheet 12. That is, if the connecting strength between the fixing piece 13 and the connecting part 122 is smaller than the breaking strength of the weak region 121a, gas pressures required by the explosion-proof sheet 12 to separate from the fixing piece 13 at different connecting regions of the fixing piece 13 and the explosion-proof sheet 12 will be different. Thus, it is difficult to control consistency of the internal critical gas pressure of the secondary battery.

Similarly, when the fixing piece 13 does not melt, the connecting strength between the fixing piece 13 and the cap plate 11 is larger than the breaking strength of the weak region 121a.

The cap plate assembly 1 of the secondary battery according to the present disclosure will be detailed below in combination with different examples.

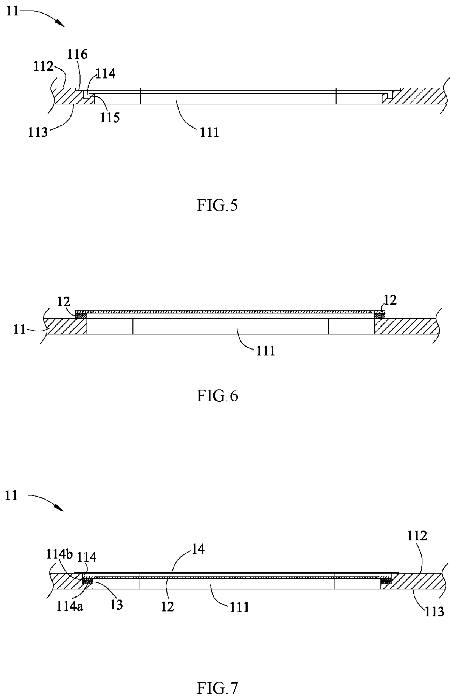

As shown in FIG. 6, in a first example, not according to invention, the cap plate 11 has a first surface 112 and a second surface 113 disposed oppositely in a thickness direction Z. The first surface 112 is an outer surface of the cap plate 11 away from the electrode assembly 2 and the second surface 113 is an inner surface of the cap plate 11 close to the electrode assembly 2.

The through hole 111 penetrates through the first surface 112 and the second surface 113. In this example, the explosion-proof sheet 12 is located at a side of the cap plate 11 away from the electrode assembly 2, and the fixing piece 13 is located between the first surface 112 of the cap plate 11 and the explosion-proof sheet 12.

In this example, the cap plate 11 may support the explosion-proof sheet 12 from a lower side. In this case, when the fixing piece 13 melts, the explosion-proof sheet 12 is prevented from falling into the secondary battery, thereby reducing a potential safety hazard.

As shown in FIG. 7, on the basis of the first example, the cap plate 11 according to a second example not falling within the scope of the claims further has a first groove 114. The first groove 114 concaves toward the second surface 113 from the first surface 112. The first groove 114 is of ring shape, surrounds the periphery of the through hole 111 and communicates with the through hole 111.

The fixing piece 13 is at least partially received in the first groove 114. Further, the fixing piece 13 is located between the explosion-proof sheet 12 and a bottom wall 114a of the first groove 114. In an example, the fixing piece 13 is completely received in the first groove 114.

Compared with the first example, space occupied by the fixing piece 13 in the thickness direction Z may be reduced by disposing the first groove 114 in the second example.

The explosion-proof sheet 12 is at least partially located in the first groove 114. In an example, the explosion-proof sheet 12 is completely received in the first groove 114. In this way, the space occupied by the explosion-proof sheet 12 in the thickness direction is saved.

The cap plate assembly 1 further includes a protection sheet 14. The protection sheet 14 is located at a side of the explosion-proof sheet 12 away from the electrode assembly 2. The protection sheet 14 may also be fixed at the first surface 112 of the cap plate 11 and cover the first groove 114. The protection sheet 14 may protect the explosion-proof sheet 12 from being damaged by external impurities. The protection sheet is a film sheet with less strength. When the explosion-proof sheet 12 opens, the protection sheet 14 is easily broken through by the high temperature gas and thus will not block release of the high temperature gas.

In the thickness direction Z, a gap is disposed between the explosion-proof sheet 12 and the protection sheet 14. In a case of short circuit of the secondary battery, the explosion-proof sheet 12 deforms under the action of gas pressure. If the explosion-proof sheet 12 is in direct contact with the protection sheet 14, the protection sheet 14 may limit the deformation of the explosion-proof sheet 12, thereby hindering breakage of the weak region 121a.

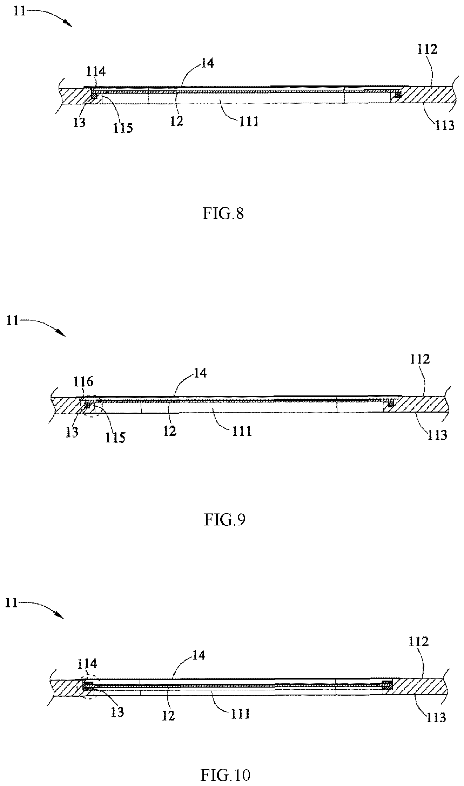

As shown in FIG. 8, on the basis of the second example, the cap plate 11 according to the invention, a third example includes a stopping part 115. The stopping part 115 extends toward the explosion-proof sheet 12 from the bottom wall 114a of the first groove 114. The stopping part 115 surrounds the periphery of the through hole 111. The fixing piece 13 is at least partially located at a side of the stopping part away from the through hole 111. That is, the fixing piece 13 is at least partially located between the stopping part 115 and a side wall 114b of the first groove 114.

In the second example, if the fixing piece 13 melts, metal liquid resulting from melting may flow to the electrode assembly 2 through the through hole 111. In this case, the metal liquid may cause internal short circuit to the secondary battery, increasing explosion risk. In the third example, the stopping part 115 may block flow of the metal liquid, thereby reducing the metal liquid flowing to the electrode assembly 2 and lowering the safety risk.

Along the extending direction of the stopping part 115, a top surface of the stopping part 115 does not go beyond the first surface 112 so that additional space occupied by the stopping part 115 along the thickness direction Z is avoided. In the thickness direction Z, the explosion-proof sheet 12 is at least partially located in the first groove 114 to reduce space occupied by the explosion-proof sheet 12 in the thickness direction Z. In an example, the explosion-proof sheet 12 is completely located in the first groove 114.

As shown in FIG. 2, on the basis of the third example, the cap plate 11 according to a fourth example further has a second groove 116. The second groove 116 concaves toward the second surface 113 from the first surface 112 and the second groove 116 surrounds the periphery of the first groove 114. In the thickness direction Z, a depth of the second groove 116 is smaller than a depth of the first groove 114.

In the fourth example, a step may be formed at the cap plate 11 by disposing the first groove 114 and the second groove 116. The step may facilite location and installation of the explosion-proof sheet 12.

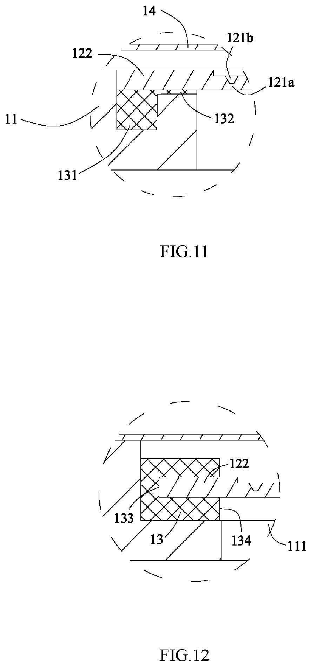

As shown in FIGS. 9 and 11, on the basis of the fourth example, the fixing piece 13 according to a fifth example includes a first part 131 and a second part 132. The first part 131 is located at a side of the stopping part 115 away from the through hole 111, and the second part 132 extends from an edge of the first part 131 close to the through hole 111, and is located between the stopping part 115 and the explosion-proof sheet 12.

Compared with the fourth example, connecting area between the fixing piece 13 and the connecting part 122 is increased by disposing the second part 132 in the fifth example, so that sealing performance between the fixing piece 13 and the explosion-proof sheet 12 is improved.

In a sixth example, not according to the invention, as shown in FIGS. 10 and 12, the fixing piece has a receiving groove 133. The receiving groove 133 concaves from an inner wall 134 of the fixing piece 13 close to the through hole 111. The connecting part 122 of the explosion-proof sheet 12 is inserted into the receiving groove 133 of the fixing piece 13 and connected with the fixing piece 13. By disposing the receiving groove 133, the connecting area between the fixing piece 13 and the explosion-proof sheet 12 is increased, thereby improving the sealing performance.

## Claims

1. A cap plate assembly (1) of a secondary battery, comprising a cap plate (11), an explosion-proof sheet (12) and a fixing piece (13); wherein,
the cap plate (11) is disposed with a through hole (111), the explosion-proof sheet (12) is disposed at the cap plate (11) and seals the through hole (111), and the explosion-proof sheet (12) has a weak region (121a);
the fixing piece (13) connects the cap plate (11) and the explosion-proof sheet (12), the fixing piece (13) has a lower melting point than the cap plate (11) and the explosion-proof sheet (12);
the fixing piece (13) is configured as that: the explosion-proof sheet (12) at least partially separates from the cap plate when a temperature in the secondary battery is higher that a melting point of the fixing piece (13) and when an internal gas pressure of the secondary battery is lower than the gas pressure required for breakage of the weak region (121a);
**characterized in that**,
the cap plate (11) has a first surface (112) and a second surface (113) disposed oppositely in a thickness direction (Z), and the through hole (111) penetrates through the first surface (112) and the second surface (113);
the cap plate (11) further has a first groove (114), wherein the first groove (114) concaves toward the second surface (113) from the first surface (112) and the first groove (114) surrounds periphery of the through hole (111);
the fixing piece (13) is at least partially received in the first groove (114), and the fixing piece (13) is located between the explosion-proof sheet (12) and a bottom wall (114a) of the first groove (114);
the cap plate (11) further comprises a stopping part (115), wherein the stopping part (115) extends toward the explosion-proof sheet (12) from the bottom wall (114a) of the first groove (114);
the stopping part (115) surrounds the periphery of the through hole (111) and the fixing piece (13) is at least partially located between the stopping part (115) and a side wall (114b) of the first groove (114).

2. The cap plate assembly (1) according to claim 1, wherein,
the explosion-proof sheet (12) comprises a main body (121) and a connecting part (122), wherein the main body (121) covers the through hole (111); the weak region (121a) is formed at the main body (121) and has a smaller thickness than other region of the main body (121); the connecting part (122) surrounds an outer side of the main body (121) and is fixed to the cap plate (11) through the fixing piece (13);
the cap plate assembly (1) is further configured as that: when the fixing piece (13) does not melt, a connecting strength between the fixing piece (13) and the connecting part (122) is larger than a breaking strength of the weak region (121a).

3. The cap plate assembly (1) according to claim 2, wherein, the weak region (121a) is formed by a notch (121b) at the main body (121).

4. The cap plate assembly (1) according to claim 1, wherein, the explosion-proof sheet (12) is at least partially located in the first groove (114).

5. The cap plate assembly according to claim 4, wherein,
the cap plate (11) assembly further comprises a protection sheet (14), the protection sheet (14) is fixed at the first surface (112) of the cap plate (11) and covers the first groove (114);
a gap is disposed between the explosion-proof sheet (12) and the protection sheet (14) in the thickness direction (Z).

6. The cap plate assembly (1) according to claim 1, wherein a top surface of the stopping part (115) does not go beyond the first surface (112) along the extending direction of the stopping part (115); the explosion-proof sheet (12) is at least partially located in the first groove (114) in the thickness direction (Z).

7. The cap plate assembly (1) according to claim 1, wherein
the cap plate (11) further comprises a second groove (116), the second groove (116) concaves toward the second surface (113) from the first surface (112) and the second groove (116) surrounds the periphery of the first groove (114);
a depth of the second groove (116) is smaller than a depth of the first groove (114) in the thickness direction (Z);
the first groove (114) and the second groove (116) forms a step at the cap plate (11) for location and installation of the explosion-proof sheet (12).

8. The cap plate assembly (1) according to claim 1, wherein the fixing piece (13) comprises a first part (131) and a second part (132); the first part (131) is located at a side of the stopping part (115) away from the through hole (111); the second part (132) extends from an edge of the first part (131) close to the through hole (111) and is located between the stopping part (115) and the explosion-proof sheet (12).

9. The cap plate assembly (1) according to any one of claims 1 to 8, wherein the fixing piece (13) is an alloy and the alloy has a melting point of 50°C-300°C.

10. The cap plate assembly (1) according to claim 9, wherein the alloy is a tin-Bismuth alloy or a tin-copper-silver alloy.

11. A secondary battery, comprising an electrode assembly (2), a case (3) and the cap plate assembly (1) according to any one of claims 1 to 10;
wherein the electrode assembly (2) is received in the case (3) and the cap plate (11) of the cap plate assembly (1) is connected to the case (3).

12. A battery module (10), comprising the secondary battery (110) according to claim11, wherein there are a plurality of secondary batteries (110) arranged in sequence.

## Patentansprüche

1. Kappenplattenanordnung (1) einer Sekundärbatterie, umfassend eine Kappenplatte (11), eine explosionsgeschützte Folie (12) und ein Befestigungsstück (13); wobei
die Kappenplatte (11) mit einem Durchgangsloch (111) angeordnet ist, die explosionsgeschützte Folie (12) an der Kappenplatte (11) angeordnet ist und das Durchgangsloch (111) abdichtet und die explosionsgeschützte Folie (12) eine schwache Region (121a) aufweist;
das Befestigungsstück (13) die Kappenplatte (11) mit der explosionsgeschützten Folie (12) verbindet, wobei das Befestigungsstück (13) einen niedrigeren Schmelzpunkt aufweist als die Kappenplatte (11) und die explosionsgeschützte Folie (12) ;
das Befestigungsstück (13) derart ausgebildet ist, dass: die explosionsgeschützte Folie (12) zumindest teilweise von der Kappenplatte getrennt ist, wenn eine Temperatur in der Sekundärbatterie höher ist als ein Schmelzpunkt des Befestigungsstücks (13) und wenn ein Innengasdruck der Sekundärbatterie niedriger ist als der Gasdruck zum Brechen der schwachen Region (121a);
**dadurch gekennzeichnet, dass**:
die Kappenplatte (11) eine erste Fläche (112) und eine zweite Fläche (113) aufweist, die einander gegenüber in einer Dickenrichtung (Z) angeordnet sind, und das Durchgangsloch (111) die erste Fläche (112) und die zweite Fläche (113) durchdringt;
die Kappenplatte (11) ferner eine erste Nut (114) aufweist, wobei die erste Nut (114) von der ersten Fläche (112) in Richtung der zweiten Fläche (113) konkav ist und die erste Nut (114) einen Umfang des Durchgangslochs (111) umgibt;
das Befestigungsstück (13) zumindest teilweise in der ersten Nut (114) aufgenommen ist und sich das Befestigungsstück (13) zwischen der explosionsgeschützten Folie (12) und einer unteren Wand (114a) der ersten Nut (114) befindet;
die Kappenplatte (11) ferner einen Anschlagteil (115) umfasst, wobei sich der Anschlagteil (115) von der unteren Wand (114a) der ersten Nut (114) in Richtung der explosionsgeschützten Folie (12) erstreckt;
der Anschlagteil (115) den Umfang des Durchgangslochs (111) umgibt und sich das Befestigungsstück (13) zumindest teilweise zwischen dem Anschlagteil (115) und einer Seitenwand (114b) der ersten Nut (114) befindet.

2. Kappenplattenanordnung (1) nach Anspruch 1, wobei
die explosionsgeschützte Folie (12) einen Hauptkörper (12) und einen Verbindungsteil (122) umfasst, wobei der Hauptkörper (121) das Durchgangsloch (111) bedeckt; die schwache Region (121a) an dem Hauptkörper (121) gebildet ist und eine geringere Dicke aufweist als eine andere Region des Hauptkörpers (121); der Verbindungsteil (122) eine Außenseite des Hauptkörpers (121) umgibt und durch das Befestigungsstück (13) an der Kappenplatte (11) befestigt ist;
die Kappenplattenanordnung (1) ferner so ausgebildet ist, dass: wenn das Befestigungsstück (13) nicht schmilzt, eine Verbindungsfestigkeit zwischen dem Befestigungsstück (13) und dem Verbindungsteil (122) größer als eine Bruchfestigkeit der schwachen Region (121a) ist.

3. Kappenplattenanordnung (1) nach Anspruch 2, wobei die schwache Region (121a) durch eine Kerbe (121b) an dem Hauptkörper (121) gebildet ist.

4. Kappenplattenanordnung (1) nach Anspruch 1, wobei sich die explosionsgeschützte Folie (12) zumindest teilweise in der ersten Nut (114) befindet.

5. Kappenplattenanordnung nach Anspruch 4, wobei
die Anordnung der Kappenplatte (11) ferner eine Schutzfolie (14) umfasst, wobei die Schutzfolie (14) an der ersten Fläche (112) der Kappenplatte (11) befestigt ist und die erste Nut (114) bedeckt;
ein Spalt in der Dickenrichtung (Z) zwischen der explosionsgeschützten Folie (12) und der Schutzfolie (14) angeordnet ist.

6. Kappenplattenanordnung (1) nach Anspruch 1, wobei eine obere Fläche des Anschlagteils (115) entlang der Erstreckungsrichtung des Anschlagteils (115) nicht über die erste Fläche (112) hinausgeht; wobei sich die explosionsgeschützte Folie (12) in der Dickenrichtung (Z) zumindest teilweise in der ersten Nut (114) befindet.

7. Kappenplattenanordnung (1) nach Anspruch 1, wobei
die Kappenplatte (11) ferner eine zweite Nut (116) umfasst, wobei die zweite Nut (116) von der ersten Fläche (112) in Richtung der zweiten Fläche (113) konkav ist und die zweite Nut (116) den Umfang der ersten Nut (114) umgibt;
eine Tiefe der zweiten Nut (116) in der Dickenrichtung (Z) kleiner ist als eine Tiefe der ersten Nut (114);
die erste Nut (114) und die zweite Nut (116) eine Stufe zur Lokalisierung und zum Einbau der explosionsgeschützten Folie (12) an der Kappenplatte (11) bilden.

8. Kappenplattenanordnung (1) nach Anspruch 1, wobei das Befestigungsstück (13) einen ersten Teil (131) und einen zweiten Teil (132) umfasst; wobei sich der erste Teil (131) auf einer Seite des Anschlagteils (115) entfernt von dem Durchgangsloch (111)befindet; wobei sich der zweite Teil (132) von einer Kante des ersten Teils (131) in der Nähe des Durchgangslochs (111) erstreckt und sich zwischen dem Anschlagteil (115) und der explosionsgeschützten Folie (12) befindet.

9. Kappenplattenanordnung (1) nach einem der Ansprüche 1 bis 8, wobei das Befestigungsstück (13) eine Legierung ist und die Legierung einen Schmelzpunkt von 50 °C-300 °C aufweist.

10. Kappenplattenanordnung (1) nach Anspruch 9, wobei die Legierung eine Zinn-Bismuth-Legierung oder eine Zinn-Kupfer-Silber-Legierung ist.

11. Sekundärbatterie, umfassend eine Elektrodenanordnung (2), ein Gehäuse (3) und die Kappenplattenanordnung (1) nach einem der Ansprüche 1 bis 10;
wobei die Elektrodenanordnung (2) in dem Gehäuse (3) aufgenommen ist und die Kappenplatte (11) der Kappenplattenanordnung (1) mit dem Gehäuse (3) verbunden ist.

12. Batteriemodul (10), umfassend die Sekundärbatterie (110) nach Anspruch 11, wobei eine Vielzahl von Sekundärbatterien (110) in Reihe geschaltet sind.

## Revendications

1. Ensemble plaque de recouvrement (1) d'une batterie secondaire, comprenant une plaque de recouvrement (11), une feuille anti-déflagrante (12) et une pièce de fixation (13) ; dans lequel,
la plaque de recouvrement (11) est disposée avec un trou traversant (111), la feuille anti-déflagrante (12) est disposée au niveau de la plaque de recouvrement (11) et scelle le trou traversant (111), et la feuille anti-déflagrante (12) a une région de faiblesse (121a) ;
la pièce de fixation (13) raccorde la plaque de recouvrement (11) et la feuille anti-déflagrante (12), la pièce de fixation (13) a un point de fusion inférieur à la plaque de recouvrement (11) et à la feuille anti-déflagrante (12) ;
la pièce de fixation (13) est configurée de sorte que : la feuille anti-déflagrante (12) se sépare au moins partiellement de la plaque de recouvrement lorsqu'une température dans la batterie secondaire est supérieure à un point de fusion de la pièce de fixation (13) et lorsqu'une pression de gaz interne de la batterie secondaire est inférieure à la pression de gaz requise pour une rupture de la région de faiblesse (121a) ;
**caractérisé en ce que**,
la plaque de recouvrement (11) a une première surface (112) et une seconde surface (113) disposées à l'opposé dans une direction d'épaisseur (Z), et le trou traversant (111) pénètre à travers la première surface (112) et la seconde surface (113) ;
la plaque de recouvrement (11) a en outre une première rainure (114), dans lequel la première rainure (114) est concave vers la seconde surface (113) depuis la première surface (112) et la première rainure (114) entoure une périphérie du trou traversant (111) ;
la pièce de fixation (13) est au moins partiellement reçue dans la première rainure (114), et la pièce de fixation (13) est située entre la feuille anti-déflagrante (12) et une paroi de fond (114a) de la première rainure (114) ;
la plaque de recouvrement (11) comprend en outre une partie d'arrêt (115), dans lequel la partie d'arrêt (115) s'étend vers la feuille anti-déflagrante (12) depuis la paroi de fond (114a) de la première rainure (114) ;
la partie d'arrêt (115) entoure la périphérie du trou traversant (111) et la pièce de fixation (13) est au moins partiellement située entre la partie d'arrêt (115) et une paroi de côté (114b) de la première rainure (114).

2. Ensemble plaque de recouvrement (1) selon la revendication 1, dans lequel,
la feuille anti-déflagrante (12) comprend un corps principal (121) et une partie de raccordement (122), dans lequel le corps principal (121) couvre le trou traversant (111) ; la région de faiblesse (121a) est formée au niveau du corps principal (121) et a une épaisseur plus petite qu'une autre région du corps principal (121) ; la partie de raccordement (122) entoure un côté extérieur du corps principal (121) et est fixée à la plaque de recouvrement (11) par le biais de la pièce de fixation (13) ;
l'ensemble plaque de recouvrement (1) est en outre configuré de sorte que : lorsque la pièce de fixation (13) ne fond pas, une résistance de raccordement entre la pièce de fixation (13) et la partie de raccordement (122) soit plus grande qu'une résistance à la rupture de la région de faiblesse (121a).

3. Ensemble plaque de recouvrement (1) selon la revendication 2, dans lequel, la région de faiblesse (121a) est formée par une encoche (121b) au niveau du corps principal (121).

4. Ensemble plaque de recouvrement (1) selon la revendication 1, dans lequel, la feuille anti-déflagrante (12) est au moins partiellement située dans la première rainure (114).

5. Ensemble plaque de recouvrement selon la revendication 4, dans lequel,
la plaque de recouvrement (11) comprend en outre une feuille de protection (14), la feuille de protection (14) est fixée au niveau de la première surface (112) de la plaque de recouvrement (11) et couvre la première rainure (114) ;
un écartement est disposé entre la feuille anti-déflagrante (12) et la feuille de protection (14) dans la direction d'épaisseur (Z).

6. Ensemble plaque de recouvrement (1) selon la revendication 1, dans lequel une surface de dessus de la partie d'arrêt (115) ne va pas au-delà de la première surface (112) suivant la direction d'extension de la partie d'arrêt (115) ; la feuille anti-déflagrante (12) est au moins partiellement située dans la première rainure (114) dans la direction d'épaisseur (Z).

7. Ensemble plaque de recouvrement (1) selon la revendication 1, dans lequel
la plaque de recouvrement (11) comprend en outre une seconde rainure (116), la seconde rainure (116) est concave vers la seconde surface (113) depuis la première surface (112) et la seconde rainure (116) entoure la périphérie de la première rainure (114) ;
une profondeur de la seconde rainure (116) est plus petite qu'une profondeur de la première rainure (114) dans la direction d'épaisseur (Z) ;
la première rainure (114) et la seconde rainure (116) forment un décrochement au niveau de la plaque de recouvrement (11) pour l'emplacement et l'installation de la feuille anti-déflagrante (12).

8. Ensemble plaque de recouvrement (1) selon la revendication 1, dans lequel la pièce de fixation (13) comprend une première partie (131) et une seconde partie (132) ; la première partie (131) est située d'un côté de la partie d'arrêt (115) éloigné du trou traversant (111) ; la seconde partie (132) s'étend depuis un bord de la première partie (131) proche du trou traversant (111) et est située entre la partie d'arrêt (115) et la feuille anti-déflagrante (12).

9. Ensemble plaque de recouvrement (1) selon l'une quelconque des revendications 1 à 8, dans lequel la pièce de fixation (13) est un alliage et l'alliage a un point de fusion de 50 °C à 300 °C.

10. Ensemble plaque de recouvrement (1) selon la revendication 9, dans lequel l'alliage est un alliage d'étain-bismuth ou un alliage d'étain-cuivre-argent.

11. Batterie secondaire, comprenant un ensemble d'électrodes (2), un boîtier (3) et l'ensemble plaque de recouvrement (1) selon l'une quelconque des revendications 1 à 10 ;
dans laquelle l'ensemble d'électrodes (2) est reçu dans le boîtier (3) et la plaque de recouvrement (11) de l'ensemble plaque de recouvrement (1) est raccordée au boîtier (3).

12. Module de batterie (10), comprenant la batterie secondaire (110) selon la revendication 11, dans lequel une pluralité de batteries secondaires (110) sont agencées en séquence.
